# EUROPÄISCHE PATENTSCHRIFT

(11) **EP 2 889 638 B1**
(45) Veröffentlichungstag und Bekanntmachung des Hinweises auf die Patenterteilung: **10.06.2020**
(21) Anmeldenummer: 15000289.7
(22) Anmeldetag: 31.01.2013
(51) Int. Cl.: G01S 13/00, G01S 13/87

(54) **Verfahren zur Betreibung eines Passivradars**
Method for operating a passive radar
Procédé de fonctionnement d'un radar passif

(43) Veröffentlichungstag der Anmeldung: 01.07.2015
(62) Teilanmeldung aus: 13000460.9
(73) Patentinhaber: HENSOLDT Sensors GmbH, 82024 Taufkirchen (DE)
(72) Erfinder: Edrich, Michael, 89197 Weidenstetten (DE); Schröder, Alexander, 89231 Neu-Ulm (DE)
(74) Vertreter: LifeTech IP Spies & Behrndt Patentanwälte PartG mbB

(56) Entgegenhaltungen:
- EP-A2- 1 972 962
- DE-T2- 69 805 576
- US-A- 5 296 860
- INGGS M R ET AL: "Commensal radar using separated reference and surveillance channel configuration", ELECTRONICS LETTERS, IEE STEVENAGE, GB, Bd. 48, Nr. 18, 30. August 2012 (2012-08-30), Seiten 1158-1160, XP006041177, ISSN: 0013-5194, DOI: 10.1049/EL.2012.1124

## Beschreibung

Die Erfindung betrifft ein Verfahren zum Betreiben eines Passivradars nach dem Oberbegriff des Patentanspruch 1.

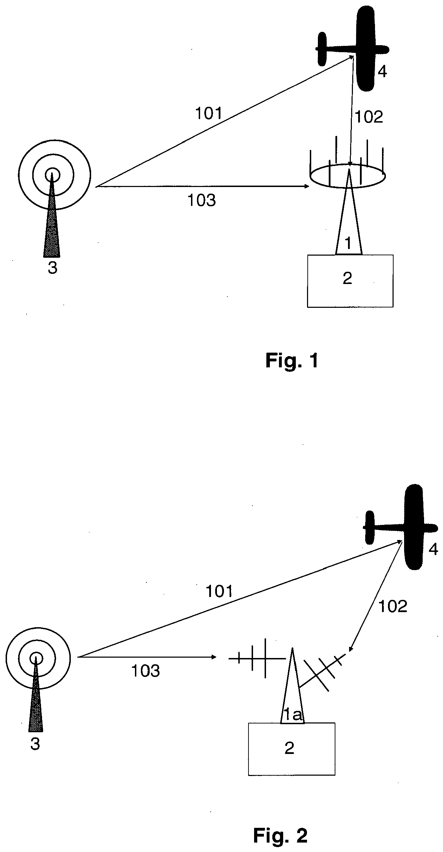

Ein Passivradar zeichnet sich gemäß dem allgemeinen Stand der Technik durch folgende Eigenschaften aus, siehe Fig.1:
- Es besteht im Wesentlichen aus einer Empfangseinheit 1 zur Signalaufnahme und einer Verarbeitungseinheit 2 zur Signalverarbeitung.
- Es verfügt über keine eigene Sendeeinheit.
- Der zur Zielbeleuchtung benötigte Sender 3 (im Folgenden auch "Beleuchter" genannt) ist nicht-kooperativ (z.B. FM-, DAB-, DVB-T-, GSM-Sender, etc.).
- Die Konstellation ist bistatisch, d.h. Sender 3 und Empfangseinheit 1 sind disloziert, d.h. räumlich getrennt.

Das prinzipielle Vorgehen zur Zielortung mittels Passivradar wird anhand Fig. 1 erläutert:
- Der nicht-kooperative Sender 3, welcher zur Zielbeleuchtung verwendet wird, strahlt ein Signal 101,103 ab.
- Dieses Signal gelangt durch Wellenausbreitung
   - auf direktem Weg unmittelbar vom Sender 3 zur Empfangseinheit 1 des Passivradars - dies wird in der Fachliteratur wie auch im Folgenden als "Direktsignal" 103 bezeichnet. Als Direktsignal im Sinne der vorliegenden Erfindungsoffenbarung wird auch ein von der Empfangseinheit 1 auf direktem Weg von einem anderen Sender empfangenes Signal bezeichnet, soweit dieser andere Sender denselben Signalinhalt auf derselben Frequenz abstrahlt.
   - mittels Reflexion an einem Ziel 4, z.B. einem Luftfahrzeug, über einen Umweg 101 zur Empfangseinheit 1 des Passivradars - dies wird in der Fachliteratur wie auch im Folgenden als "Zielsignal" 102 bezeichnet.
- Die Zieldetektion basiert auf einem Korrelationsprozess des Zielsignals 102 mit einem Referenzsignal in der Verarbeitungseinheit 2, wobei
   - das Referenzsignal aus dem Direktsignal 103 gewonnen wird.
   - das Direktsignal 103 im Allgemeinen um Größenordnungen stärker als das Zielsignal 102 an der Empfangseinheit 1 ankommt.
   - das Zielsignal 102 gegenüber dem Direktsignal 103 Laufzeit- und (bei Zielbewegung) Dopplerverschoben an der Empfangseinheit 1 ankommt und somit als Ergebnis des Korrelationsprozesses eine Range-Doppler-Matrix entsteht, in welcher an entsprechender Stelle in Range und Doppler sich das Ziel 4 befindet.
   - zwingend Referenzsignal und Zielsignal 102 mit ausreichendem Signal-zu-Störabstand an der Verarbeitungseinheit 2 vorliegen müssen.

Verschiedene Varianten für den Aufbau und Betrieb bekannter Passivradare sind in den Fig. 1 bis 3 dargestellt. Für alle drei Varianten gilt:
- Referenzsignal, gewonnen aus dem Direktsignal 103, und Zielsignal 102 stammen vom selben Sender 3.
- Direktsignal 103 und Zielsignal 102 werden mit derselben Empfangseinheit 1 des Passivradars aufgenommen.
- Das Direktsignal 103 gelangt auf direktem Weg mittels Wellenausbreitung vom Sender 3 zur Empfangseinheit 1.

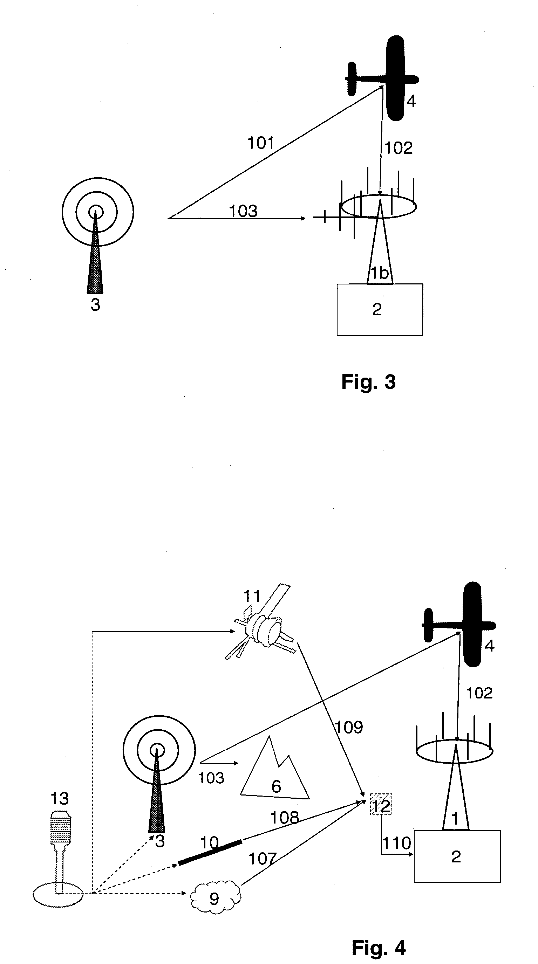

Die Empfangseinheit kann in verschiedenen Ausführungen gestaltet sein, u.a.:
- Empfangseinheit 1 in Fig. 1: Kreisarray zur Direktsignalaufnahme mittels Beamforming und zur omnidirektionalen Zielraumüberwachung, [1]
- Empfangseinheit 1a in Fig. 2: Richtantenne zur Direktsignalaufnahme, weitere Richtantenne zur sektoriellen Zielraumüberwachung, [2].
- Empfangseinheit 1b in Fig. 3: Richtantenne zur Direktsignalaufnahme, Kreisarray zur omnidirektionalen Zielraumüberwachung.

Die Antennen der Empfangseinheit befinden sich dabei innerhalb eines maximalen Abstands von wenigen Metern.

Für den Korrelationsprozess ist das Vorliegen eines Referenzsignals in der Verarbeitungseinheit des Passivradars unerlässlich. Im Hinblick auf einen optimalen Korrelationsprozess ergeben sich bei den bekannten Passivradaren die folgenden Limitierungen:
- Gelangt das Direktsignal nach dem Stand der Technik auf unmittelbarem Weg mittels Wellenausbreitung direkt vom nicht-kooperativen Sender zur Empfangseinheit des Passivradars, so ist dieses im Allgemeinen um Größenordnungen stärker als das Zielsignal an der Empfangseinheit. Dieses limitiert einerseits die Dynamik der Empfangseinheit und maskiert andererseits auf Grund der Eigenschaft des Korrelationsverhaltens der verwendeten Signale (Zielsignal und Direktsignal) die Radarziele in der Range-Doppler-Matrix.
- Für einen optimalen Korrelationsprozess ist das Zielsignal vollständig von allen Anteilen des Direktsignals zu bereinigen. Dieses wird Stand der Technik im Wesentlichen in der Verarbeitungseinheit algorithmisch gelöst, [3] und sorgt lediglich für eine unvollständige Unterdrückung des Direktsignals im Zielsignal, was zu einer verringerten Detektionsleistung führt.
- Für einen optimalen Korrelationsprozess ist weiterhin das Referenzsignal vollständig von allen Interferenzanteilen zu bereinigen. Dieses wird gemäß dem Stand der Technik im Wesentlichen in der Verarbeitungseinheit algorithmisch durchgeführt und sorgt allerdings nur für eine unvollständige Interferenzbereinigung und somit zu einer verringerten Detektionsleistung.

Die EP 1 972 962 A2 beschreibt ein Passivradarverfahren, bei dem am Ziel reflektierte Signale von mehreren Empfängern empfangen werden, wobei an diesen Empfängern auf direktem Weg kein Sendesignal des nicht-kooperativen Senders empfangen wird. Die Position des Ziels wird nicht mittels eines Referenzsignals, welches das Signal eines nicht-kooperativen Sendes auf direktem Weg empfängt, ermittelt, sondern aus den Zeitdifferenzen, mit denen die einzelnen Empfänger die am Ziel reflektierten Signale empfangen.

Ein Passivradarverfahren, das die eingangs genannten Limitierungen der bekannten Verfahren überwindet, ist in INGGS M R ET AL: "Commensal radar using separated reference and surveillance channel configuration", ELECTRONICS LETTERS, IEE STEVENAGE, GB, Bd. 48, Nr. 18, 30. August 2012 (2012-08-30), Seiten 1158-1160, XP006041177, ISSN: 0013-5194, DOI: 10.1049/EL.2012.1124 beschrieben. Dieses Dokument bildet den Oberbegriff des Patentanspruchs. Darin wird die Empfangseinheit des Passivradars derart positioniert, dass das vom nicht-kooperativen Sender auf direktem Weg empfangene Signal möglichst gering ist. Die Referenzsignalgewinnung erfolgt, indem das Signal des nicht-kooperativen Senders auf direktem Weg von einem zweiten Empfänger empfangen wird, der so platziert ist, dass ein Empfang auf direktem Weg möglich ist.

Generell sind Bi-statische Radare bekannt, bei der Sender und Empfänger räumlich getrennt sind. So ist z.B. in der DE 698 05 576 T2 ein bi-statisches Radar bekannt, bei der die Korrelation zwischen Sender und Empfänger mit Hilfe von Zusatzinformationen (z.B. Sendeträgerinformation, Identifikator des speziellen Pseudozufallssignals, relative Lage des Senders zum Empfänger, etc.) erfolgt, die über einen Hilfskanal (Kabel, Faseroptik oder Funkkanal) vom Sender zum Empfänger übertragen werden.

Ein weiteres Beispiel für ein bi-statisches Radar ist in der US 5,296,860 A beschrieben. Auch hier ist eine Datenleitung, ausgebildet als Glasfaserleitung, zwischen Sender und Empfänger vorhanden. Dabei überträgt der Empfänger das Empfangssignal zurück an den Sender. Erst am Sender findet dann der Korrelationsprozess statt. Durch diese Maßnahme kann die Verarbeitung wie bei einem monostatischen Radar am Senderstandort durchgeführt werden.

Der Erfindung liegt die Aufgabe zugrunde, ein weiteres Verfahren zum Betrieb eines Passivradars zu schaffen, welches die vorgenannten Limitierungen überwindet und insbesondere eine deutliche Steigerung der Empfindlichkeit und somit der Detektionsleistung des Passivradars erzielt.

Diese Aufgabe wird mit dem Verfahren nach dem Patentanspruch gelöst. Gemäß der vorliegenden Erfindung erfolgt die Bereitstellung des Referenzsignals in der Verarbeitungseinheit des Passivradars nicht durch Empfang des mittels Wellenausbreitung auf direktem Wege vom nicht-kooperativen Sender übertragenen Signals. Vielmehr wird die räumliche Konstellation von Sender und Passivradar gerade so gewählt, dass das Direktsignal am Ort der Empfangseinrichtung sehr gering (nämlich im Bereich der thermischen Rauschgrenze) oder überhaupt nicht mehr nachweisbar ist. Dies ist insbesondere dann der Fall, wenn sich der Sender räumlich deutlich von der Empfangseinheit entfernt befindet und/oder durch Gelände deutlich abgeschattet wird.

Durch die Unterdrückung des Direktsignals am Ort des Empfängers wird das wesentliche Hindernis für eine optimale Durchführung der Korrelation beseitigt. Das für die Korrelation nach wie vor benötigte Referenzsignal kann erfindungsgemäß auf anderen - mittelbaren - Übertragungswegen gewonnen werden. Damit kann eine deutliche Steigerung der Empfindlichkeit und somit der Detektionsleistung erzielt werden.

Zur Erreichung eines möglichst starken Zielsignals sollte der Verbindungspfad zwischen Sender und Ziel, wie auch der Verbindungspfad zwischen Ziel und Empfängereinheit möglichst frei von Abschattungen sein, was für Flugziele ohne Weiteres realisierbar ist.

Durch die mittelbare Gewinnung des Referenzsignals ist es auch möglich, letzteres in hohem Maße interferenzfrei zu gewinnen.

Weitere Vorteile der Erfindung sind:
- Deutliche Erhöhung der Reichweite des Passivradars.
- Verbesserte Detektion von Luftzielen im höheren Luftraum, da diese aufgrund der Sendeantennen-Elevationscharakteristik nur durch weit entfernte Sender zuverlässig beleuchtet werden können.
- Größere Anzahl verwendbarer Sender, daraus ergibt sich eine bessere Konfigurationsmöglichkeit des Passivradars im Hinblick auf die konkreten Detektionsanforderungen.

Konkrete Ausführungsbeispiele der Erfindung werden anhand von Figuren näher erläutert. Es zeigen:
- Fig. 1 bis 3: mehrere bekannte Ausführungen für den Betrieb von Passivradaren wie in der Beschreibungseinleitung erläutert;
- Fig. 4: mehrere erfindungsgemäße Ausführungen für den Betrieb eines Passivradars.

Allen in den in Fig. 4 gezeigten Ausführungen ist gemeinsam, dass die Gewinnung des Zielsignals 102 (insoweit identisch mit dem Stand der Technik) durch Beleuchtung 101 mit einem nicht-kooperativen Sender 3 erfolgt. Die gezeigten Ausführungen unterscheiden sich jedoch in der Art der Gewinnung des Referenzsignals.

In der Fig. 4 erfolgt die Gewinnung des Referenzsignals durch Abgreifen des unmodulierten Signals an der Signalquelle 13 (hier als Mikrofon symbolisiert) eines Rundfunksenders vor Aussendung durch den Beleuchter 3. Das abgegriffene Signal wird über weitere Übertragungskanäle 107, 109, 108, nämlich
a. Signalübertragung 107 mittels Internet 9
b. Signalübertragung 109 mittels Satellit 11
c. Signalübertragung 108 über Leitung 10
zum Passivradar transportiert, wo es über eine weitere Empfangseinheit 12 zur Gewinnung des Referenzsignals aufgenommen wird, welche dem jeweiligen Übertragungskanal angepasst ist. Von dort wird das Signal der Verarbeitungseinheit 2 über eine Verbindung 110 zugeführt und entsprechend moduliert. Laufzeit- und Frequenzversätze werden in der Verarbeitungseinheit 2 algorithmisch kompensiert. Bei digitalen Verfahren werden Datenpaketinhalte entsprechend angepasst.

### Bezugsziffern:

| **Nummer** | **Objekt** |
|---|---|
| 1 | Empfangseinheit des Passivradars |
| 2 | Verarbeitungseinheit des Passivradars |
| 3 | Sender (Beleuchter) |
| 4 | Radarziel, z.B. Flugziel |
| 6 | Gelände/Höhenzug |
| 9 | Internet |
| 10 | Leitung |
| 11 | Satellit |
| 12 | Weitere Empfangseinheit des Passivradars für das Referenzsignal |
| 13 | Signalquelle des Senders 3 |
| | |

| **Nummer** | **Signal** / **Signalpfad** |
|---|---|
| 101 | Signalpfad zwischen Sender und Radarziel |
| 102 | Zielsignal |
| 103 | Direktsignal |
| 107 | Signalübertragung mittels Internet |
| 108 | Signalübertragung über Leitung |
| 109 | Signalübertragung mittels Satellit |
| 110 | Verbindung zwischen weiterer Empfangseinheit 12 und Verarbeitungseinheit 2 |

### Referenzen:

[1] A. Schröder, M. Edrich, Cassidian, Germany; "CASSIDIAN Multiband Mobile Passive Radar System"; IRS 2011 Leipzig
[2] Dale Gould, Robert Pollard, Carlos Sarno, Paul Tittensor; "DVB-T trials with the Multiband Passive Radar Demonstrator System"; IRS 2007 Cologne
[3] K.S.Kupta, Z.Czekala; "Masking Effeckts and its Removal in PCL-Radar"; IEE Proc Radar,Sonar & Navigation, Vo. 152, Num. 3, June 2005

## Patentansprüche

1. Verfahren zum Betreiben eines Passivradars, welches eine Empfangseinheit (1) zum Empfang eines an einem Radarziel (4) reflektierten Signals (102) und eine Verarbeitungseinheit (2) umfasst, wobei die Empfangseinheit (2) zur Verarbeitung des reflektierten Signals (102) unter Einbeziehung eines Referenzsignals zur Zieldetektion dient, welches mit dem reflektierten Signal (102) korreliert ist,
- die Empfangseinheit (1) des Passivradars in Bezug auf einen zur Zielbeleuchtung verwendeten nicht-kooperativen Sender (3) derart räumlich positioniert ist, dass das von der Empfangseinheit (1) auf direktem Weg empfangene Signal (103) des nicht-kooperativen Senders (3) nur sehr schwach ausgeprägt ist, nämlich im Bereich der thermischen Rauschgrenze liegt oder gar nicht vorhanden ist,
- das Referenzsignal durch alternative Übertragungswege (107,108, 109) als durch Übertragung (103) auf direktem Weg vom nicht-kooperativen Sender (3) zum Passivradar gewonnen wird, und der Verarbeitungseinheit (2) zur Verfügung gestellt wird,
**dadurch gekennzeichnet, dass** das zur Zielbeleuchtung verwendete Signal des nicht-kooperativen Senders (3) das von einem Rundfunksender abgestrahlte Sendesignal ist, und die Referenzsignalgewinnung erfolgt, in dem das Passivradar mittels einer weiteren Empfangseinheit (12) ein Signal empfängt, das der dem Rundfunksender zugeordneten Signalquelle (13) vor der Aussendung durch den Rundfunksender (3) abgegriffen wurde und über einen der folgenden weiteren Übertragungskanäle (107, 109, 108)
- Signalübertragung (107) mittels Internet (9),
- Signalübertragung (109) mittels Satelliten (11)
- Signalübertragung (108) über eine Leitung (10)
an die weitere Empfangseinheit (12) des Passivradar übertragen wurde.

## Claims

1. A method for operating a passive radar, which passive radar comprises a receiving unit (1) for receiving a signal (102) reflected from a radar target (4), and comprises a processing unit (2), the receiving unit (2) being used for processing the reflected signal (102), taking into account a reference signal for detecting a target, which reference signal is correlated with the reflected signal (102),
- the receiving unit (1) of the passive radar being spatially positioned in relation to a non-cooperative transmitter (3) that is used for illuminating a target, such that the signal (103) of the non-cooperative transmitter (3) received directly by the receiving unit (1) is only very weak, specifically in the range of the thermal noise limit or not present at all,
- the reference signal being derived by means of alternative transmission paths (107, 108, 109) as opposed to by means of transmission (103), directly from the non-cooperative transmitter (3) to the passive radar, and being made available to the processing unit (2),
**characterized in that** the signal of the non-cooperative transmitter (3) used for illuminating the target is the transmitted signal emitted by a radio transmitter, and the reference signal is derived by the passive radar receiving a signal by means of a further receiving unit (12), which signal has been picked up, before transmission, by the radio transmitter (3) at the signal source (13) associated with the radio transmitter, and has been transferred to the further receiving unit (12) of the passive radar via one of the following further transmission channels (107, 109, 108):
- signal transmission (107) via the Internet (9);
- signal transmission (109) via satellite (11);
- signal transmission (108) via a cable (10).

## Revendications

1. Procédé de fonctionnement d'un radar passif qui comprend une unité de réception (1) destinée à recevoir un signal (102) réfléchi sur une cible radar (4) et une unité de traitement (2), l'unité de traitement (2) destinée à traiter le signal réfléchi (102) servant à la détection d'une cible en tenant compte d'un signal de référence corrélé avec le signal réfléchi (102),
- l'unité de réception (1) du radar passif étant positionnée dans l'espace par rapport à un émetteur non coopératif (3) utilisé pour l'éclairage de la cible de telle sorte que le signal (103) de l'émetteur non coopératif (3) reçu par voie directe par l'unité de réception (1) n'est que très faible, c'est-à-dire qu'il se situe dans la plage de la limite de bruit thermique ou n'existe pas du tout,
- le signal de référence étant généré par des voies de transmission (107, 108, 109) autres que par transmission (103) par voie directe de l'émetteur non coopératif (3) au radar passif, et étant mis à disposition de l'unité de traitement (2),
**caractérisé en ce que** le signal de l'émetteur non coopératif (3) qui est utilisé pour l'éclairage de la cible est le signal d'émission émis par un émetteur radio, et le signal de référence est généré par le fait que le radar passif reçoit, au moyen d'une autre unité de réception (12), un signal qui a été capté par l'émetteur radio (3) avant l'émission par la source de signal (13) affectée à l'émetteur radio, et qui a été transmis à l'autre unité de réception (12) du radar passif par l'intermédiaire de l'un des autres canaux de transmission suivants (107, 109, 108)
- transmission de signal (107) par Internet (9),
- transmission de signal (109) par satellite (11),
- transmission de signal (108) par l'intermédiaire d'une ligne (10).
